**Europäisches Patentamt**

**European Patent Office**

**Office européen des brevets**

(19)

(11) Numéro de publication : **0 371 829 B1**

(12)

# FASCICULE DE BREVET EUROPEEN

(45) Date de publication du fascicule du brevet :
**18.12.91 Bulletin 91/51**

(51) Int. Cl.⁵ : **F16L 37/08**

(21) Numéro de dépôt : **89402782.0**

(22) Date de dépôt : **10.10.89**

(54) **Embout pour le raccordement rapide d'un tube.**

(30) Priorité : **14.10.88 FR 8813591
27.02.89 FR 8902526**

(43) Date de publication de la demande :
**06.06.90 Bulletin 90/23**

(45) Mention de la délivrance du brevet :
**18.12.91 Bulletin 91/51**

(84) Etats contractants désignés :
**AT BE CH DE ES FR GB GR IT LI LU NL SE**

(56) Documents cités :
**FR-A- 1 403 312
FR-A- 1 535 163
GB-A- 600 086
US-A- 2 360 732
US-A- 4 266 814**

(73) Titulaire : **Etablissements CAILLAU
28, rue Ernest Renan
F-92130 Issy-les-Moulineaux (FR)**

(72) Inventeur : **Calmettes, Lionel
84, Faubourg d'Orléans
F-41200 Romorantin Lanthenay (FR)**

(74) Mandataire : **Descourtieux, Philippe et al
CABINET BEAU de LOMENIE 55 rue
d'Amsterdam
F-75008 Paris (FR)**

EP 0 371 829 B1

## Description

On a fréquemment besoin, notamment dans la construction automobile et plus généralement dans les industries de construction en série, de disposer de moyens de raccordement rapide, si possible facilement démontables, de deux tubes ou tuyaux.

C'est le cas, par exemple, lorsqu'il s'agit, au montage d'un véhicule, de raccorder les divers éléments constituant une canalisation véhiculant un fluide, qu'il s'agisse de combustible ou de liquide de refroidissement d'un moteur.

En général, un élément de canalisation comporte un tuyau, souple ou même semi-rigide, emmanché sur un embout auquel il est fixé de façon étanche par tout moyen approprié, par exemple par un collier. Si deux éléments de canalisation sont emmanchés sur le même embout et y sont fixés par des colliers, le montage du raccordement est relativement long et coûteux ; de plus, le démontage peut exiger la destruction de l'un au moins des colliers de serrage.

D'autre part, on sait qu'il est intéressant d'automatiser, dans toute la mesure du possible, les diverses étapes du montage des ensembles complexes tels que les véhicules. Il est toutefois indispensable, dans ce cas, notamment en ce qui concerne le raccordement des éléments de canalisations, de limiter les opérations à des mouvements simples, par exemple de translation, et d'éviter la nécessité d'une orientation spécifique autour d'un axe, en particulier de l'axe d'une translation.

On connaît déjà, notamment par les brevets FR-A-1535163 et 1.403.312 ainsi que par le brevet US-A-2360732 des dispositifs démontables permettant le raccordement rapide de deux tubes ou tuyaux. D'une façon générale, ils comportent un embout présentant, à une extrémité destinée à recevoir un tube, un alésage dont le diamètre est sensiblement égal au diamètre extérieur du tube. Cet alésage est pourvu d'au moins un jonc souple d'étanchéité susceptible de venir en contact avec l'une des parois du tube. D'autre part, entre l'orifice d'entrée de l'alésage et le jonc d'étanchéité, l'embout comporte un logement recevant, pour l'arrêt du tube, un organe escamotable qui y est localement immobilisé dans le sens axial.

On connaît également par le brevet US-A 4.266.814, un dispositif de raccordement du genre en question, dans lequel le jonc d'étanchéité est disposé sur la paroi intérieure massive de l'embout et fait partie intégrante de cette paroi.

Toutefois une telle structure exige une grande souplesse radiale du tube à monter dans l'embout et n'est donc pas appropriée lorsque le tube est rigide ou même seulement semi-rigide.

De tels dispositifs de raccordement présentent de nombreux avantages, notamment en ce qui concerne la facilité de leur mise en place ou de leur démontage. En outre, l'embout peut présenter deux ou plusieurs alésages associés chacun à un organe d'arrêt d'un tube, le raccordement de deux tubes s'effectuant ainsi de la même façon dans chaque alésage de l'embout.

Toutefois les exigences des techniques modernes et notamment les conditions d'étanchéité imposées au cas où les fluides véhiculés sont sous pression et éventuellement à température élevée, empêchent souvent en pratique l'utilisation des dispositifs connus précédemment décrits : cela est dû en particulier au fait que les joncs souples d'étanchéité présentent des caractéristiques physiques différentes de celles de l'embout, provoquant ainsi des phénomènes de dilatation différentielle très préjudiciables du maintien de l'étanchéité du raccordement.

L'invention apporte une solution simple à la difficulté qui vient d'être mise en évidence et permet en outre diverses réalisations sures, présentant chacune des avantages propres.

Selon l'invention, l'embout et le jonc d'étanchéité de son alésage sont réalisés dans le même matériau en accord avec les caractéristiques de la revendication principale.

En pratique le matériau unique sera avantageusement une matière plastique ; comme on le sait il existe de nombreuses matières susceptibles d'être moulées tout en présentant un résistance convenable à divers agents chimiques susceptibles d'être véhiculés par les tubes à raccorder.

Selon une première variante de réalisation, le jonc souple d'étanchéité fait saillie à l'intérieur de l'alésage de l'embout.

Selon une deuxième variante particulièrement avantageuse, une extension tubulaire est disposée à l'intérieur de l'alésage de l'embout et son diamètre extérieur est sensiblement égal au diamètre intérieur du tube à raccorder. Cette extension tubulaire, venue de moulage avec l'embout, définit un logement en forme de gorge tubulaire pour l'extrémité du tube à raccorder et comporte au moins un jonc d'étanchéité sur sa paroi extérieure.

L'invention sera mieux comprise et diverses caractéristiques secondaires, ainsi que ses avantages, apparaîtront au cours de la description qui va suivre, en référence aux dessins annexés, dans lesquels

— la figure 1 est une vue en coupe d'un embout selon l'invention, un tube étant raccordé à cet embout

— la figure 2 est une coupe suivant II-II de la figure 1

— la figure 3 est une coupe suivant III-III de la figure 1, le dispositif d'arrêt étant supposé dans sa position inactive

— la figure 4 est une vue en perspective d'un bouchon destiné à constituer l'extrémité de l'embout

— la figure 5 et la figure 6 sont des vues analogues à la figure 1 dans le cas d'une première et d'une deuxième variantes de réalisation de l'embout.

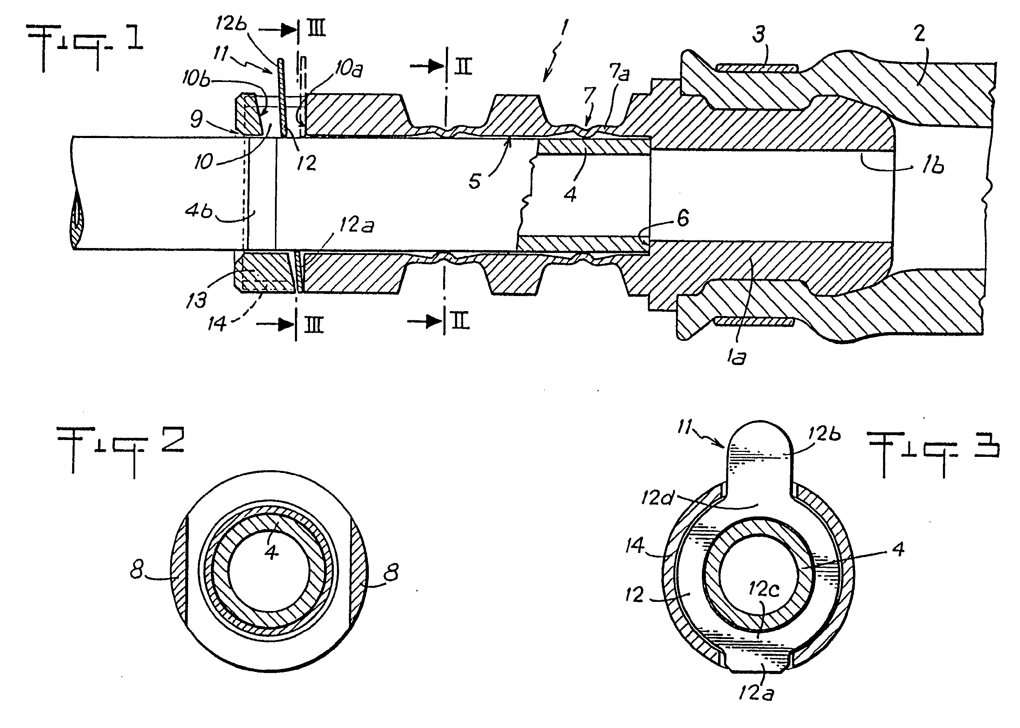

Si l'on se reporte tout d'abord aux figures 1 à 4, on voit un embout désigné par la référence générale 1 dont la partie arrière 1a (située à droite sur la figure 1) est conformée de façon qu'un tube souple 2 y soit fixé par un collier 3.

La partie gauche de l'embout 1 est destinée à recevoir un tube 4, rigide ou semi-rigide. L'embout 1 est lui-même réalisé de préférence en matière plastique moulée et présente un alésage 5 dont le diamètre est très voisin de celui du tube 4, mais au moins égal à celui-ci. L'extrémité interne de l'alésage comporte un épaulement 6 constituant une butée axiale pour le tube 4 ; bien évidemment, l'alésage 5 communique avec le conduit 1b ménagé dans la partie arrière 1a de l'embout.

Partant de l'épaulement 6 et en se dirigeant vers l'entrée de l'alésage 5, située à gauche sur la figure 1, on trouve tout d'abord au moins un jonc d'étanchéité 7 dont le diamètre intérieur à l'état libre est au plus égal et de préférence légèrement inférieur à celui du tube 4 qui doit être reçu par l'embout. Ainsi qu'on le voit sur l'exemple représenté, il existe de préférence deux joncs d'étanchéité 7, chacun d'eux étant constitué par une paroi mince 7a de l'embout, convenablement formée dans sa partie centrale et venue de moulage avec elle.

En raison de la diminution de la résistance mécanique de l'embout dans la région des joncs d'étanchéité 7, il peut être nécessaire de prévoir des renforts 8, tels que ceux visibles sur la figure 2, reliant longitudinalement les parties épaisses de la paroi de l'embout.

Entre le dernier des joncs d'étanchéité et l'orifice d'entrée 9 de l'alésage, il est prévu un logement 10 dans lequel est disposé un dispositif d'arrêt du tube 4, désigné par la référence 11.

Le dispositif d'arrêt 11 est essentiellement constitué par un organe escamotable, susceptible d'entrer en contact avec le tube 4 et de s'accrocher sur lui, cet organe étant localement immobilisé dans le logement 10, par tout moyen convenable.

Dans l'exemple représenté, le logement 10 est en forme de coin, l'une de ses faces planes 10a, de préférence celle située du côté opposé à l'orifice 9, étant perpendiculaire à l'axe de l'alésage 5, tandis que l'autre 10b est inclinée par rapport à cet axe. Le dispositif d'arrêt 11, bien visible sur la figure 3, est avantageusement réalisé sous la forme d'un anneau 12, mince et déformable, par exemple en métal, présentant deux appendices radiaux 12a et 12b diamétralement opposés. Le diamètre intérieur de l'anneau 12 est aussi voisin que possible du diamètre extérieur du tube 4 qui sera reçu par l'embout.

L'appendice 12a du dispositif d'arrêt et la zone voisine 12c de l'anneau 12 sont, comme on le voit bien sur la figure 1, situés dans la région la plus étroite du logement 10 en forme de coin, de sorte qu'ils y sont pratiquement immobilisés dans le sens axial. Au contraire, la zone 12d de l'anneau, diamétralement opposée à l'appendice 12a, ainsi que l'appendice 12b lui-même, sont situés dans une région large du logement 10 dans laquelle ils peuvent se déplacer entre les faces 10a et 10b du logement. L'appendice 12b est de dimensions suffisantes pour constituer une languette radiale faisant saillie par rapport à la surface extérieure de l'embout. Les raisons de cette disposition apparaîtront plus loin.

Enfin, on notera que la région la plus étroite du logement 10 et/ou la forme du dispositif 11 sont déterminées de telle façon qu'au repos et en l'absence du tube 4, le dispositif 11 soit dans la position représentée en trait plein sur la figure 1, ou même vienne en appui sur la face 10b du logement 10. Par exemple, le dispositif 11 peut être légèrement galbé, notamment si l'appendice 12a est situé dans un plan diamétral.

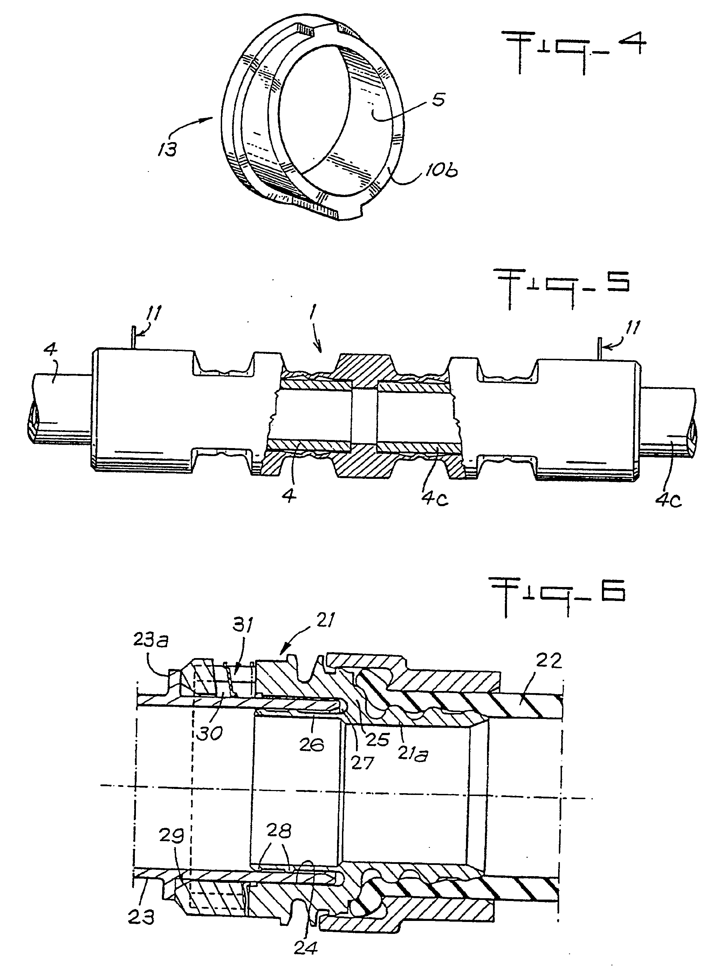

Pour réaliser facilement le logement 10 et y placer le dispositif d'arrêt escamotable 11, il peut être avantageux de constituer l'extrémité d'entrée de l'alésage 5 sous forme d'un bouchon 13, visible sur la figure 4. Ce bouchon comporte bien entendu l'orifice d'entrée 9 de l'alésage 5 et sa face interne est de préférence plane et inclinée par rapport à l'axe de l'orifice 9 pour constituer, après mise en place, la face 10b du logement 10. Au-delà de la face 10a du logement 10, l'embout présente un prolongement cylindrique 14, visible en coupe sur la figure 3, destiné à recevoir le bouchon 13 qui y sera fixé par tout moyen approprié, par exemple par collage.

Avant d'expliquer le fonctionnement de l'embout lors de la mise en place du tube 4, on signalera, en se référant à la figure 5, qu'un embout selon l'invention peut comporter deux parties identiques à celle qui vient d'être décrite en détail. Ces deux parties sont opposées l'une à l'autre et permettent de recevoir, à chaque extrémité libre de l'embout, un tube 4 ou 4a dont la mise en place ne nécessite par conséquent aucun raccordement à l'aide d'un collier de serrage.

Si l'on se reporte également à la figure 6 on voit une autre variante dans laquelle un embout est désigné par la référence générale 21. Sa partie arrière (située à droite sur la figure 6) est conformée de façon qu'un tuyau souple 22 y soit fixé par tout moyen approprié. Dans l'exemple représenté au dessin, le tuyau souple 22 est emmanchée sur un appendice formant le conduit 21a dans l'embout 21 et y est maintenu par une bague extérieure accrochée sur un épaulement de l'embout.

La partie gauche de l'embout 21 est destinée à recevoir un tube 23, rigide ou semi-rigide. L'embout 21 est lui-même réalisé de préférence en matière plastique moulée et présente un alésage 24 dont le diamètre est très voisin du diamètre extérieur du tube 23, mais au moins égal à celui-ci. L'extrémité interne de l'alésage comporte un épaulement 25 qui peut constituer une butée axiale pour le tube 23 ; bien évidemment, l'alésage 24 communique avec le conduit 21a ménagé dans la partie arrière de l'embout.

Partant de l'épaulement 25 et se dirigeant vers l'entrée de l'alésage 24, située à gauche sur la figure 6, il est prévu une extension tubulaire 26 dont le diamètre intérieur est voisin de celui du conduit 21a. Cependant, le diamètre extérieur de cette extension est au plus égal au diamètre intérieur du tube 23, de sorte qu'il existe un logement 27 en forme de gorge tubulaire susceptible de recevoir l'extrémité du tube 23.

L'étanchéité du raccordement entre le tube 23 et l'embout 1 est réalisée au moyen d'au moins un jonc 28 qui est situé sur la paroi extérieure de l'extension tubulaire 26 et venu de moulage avec celle-ci au moment de la fabrication de l'embout. Bien évidemment, le diamètre extérieur des joncs 28 est légèrement supérieur au diamètre intérieur du tube 23.

Entre le dernier des joncs d'étanchéité 28 et l'orifice d'entrée 29 de l'alésage, il est prévu un logement 30 dans lequel est situé un dispositif d'arrêt du tube 23, désigné par la référence 31 et analogue à celui décrit plus haut, en référence aux figures 1 à 4.

La mise en place du tube 4 va être maintenant expliquée en se référant à nouveau à la figure 1.

Le tube 4, dont le diamètre correspond à celui de l'alésage 5 de l'embout, est introduit dans l'orifice 9 et est enfoncé dans l'alésage jusqu'à ce qu'il atteigne l'épaulement 6 constituant butée. Pour permettre à l'opérateur un contrôle visuel de l'enfoncement, le tube 4 présente de préférence un repère 4b, par exemple une bande colorée, qui disparaît de la vue lorsque le tube 4 atteint la butée 6.

Pendant son enfoncement, le tube 4 a tout d'abord traversé le trou central de l'anneau 12 constituant le dispositif d'arrêt 11 qui, si nécessaire, a été repoussé par le tube lui-même jusqu'à ce qu'il soit en appui sur la face 10a du logement en coin 10. Dans cette position, représentée en trait ponctué sur la figure 1, le trou central de l'anneau 12 est en effet coaxial à l'alésage 5, de sorte que le dispositif d'arrêt 11 n'oppose aucun obstacle à l'enfoncement du tube 4.

Lorsque le tube 4 a franchi le dispositif d'arrêt 11, celui-ci reprend sa position initiale, sous l'effet de son élasticité, dans son plan ou dans une position voisine telle que celle représentée en trait plein sur la figure 1. Le bord interne de la zone 12d est alors en appui sur la surface extérieure du tube 4.

Poursuivant son déplacement vers la butée 6, le tube 4 rencontre les deux joncs d'étanchéité 7. Grâce à la souplesse des parois 7a, la partie annulaire des joncs laisse passer le tube tout en assurant un contact étanche avec lui.

Lorsque le tube atteint la butée 6, sa mise en place est terminée et elle n'a nécessité aucune autre opération que l'enfoncement du tube lui-même dans l'alésage 5.

Ainsi qu'on l'a déjà indiqué, l'étanchéité du raccordement est obtenue par le contact des joncs 7 et de la surface extérieure du tube 4, cependant que le maintien du tube dans l'alésage 5 est assuré par le dispositif d'arrêt 11. En effet, si l'on suppose qu'un effort d'arrachement s'exerce sur le tube 4, la zone 12d (figure 3) du dispositif 11 s'ancre instantanément dans la surface extérieure du tube 4 et évite pratiquement tout déplacement de ce dernier dans le sens de son extraction de l'alésage 5, en raison de l'immobilisation axiale de l'appendice 12a et de la zone 12c de l'anneau. Plus l'effort d'arrachement augmente, plus l'ancrage du dispositif 11 dans le tube 4 devient important.

On notera ici que le dispositif d'arrêt du tube s'oppose, comme il vient d'être dit, à tout déplacement du tube vers l'extérieur, quelle qu'en soit l'origine : il évite bien évidemment un arrachement accidentel du tube sur lequel s'exercerait un effort de traction, mais surtout il s'oppose aux efforts d'expulsion provoqués par l'action de la pression du fluide véhiculé par le tube.

Cependant, il peut être nécessaire de démonter le tube 4 et de le sortir de l'embout 1. A cet effet, l'opérateur maintient le dispositif d'arrêt 11 en appui sur la face 10a du logement 10, au moyen de l'appendice 12b, dans la position représentée en trait ponctué sur la figure 1. L'extraction du tube 4 est alors possible sans aucune difficulté, puisque le dispositif d'arrêt a été escamoté et neutralisé.

Dans le cas de la variante représentée sur la figure 6 la mise ne place du tube 23 s'effectue d'une façon analogue à celle qui vient d'être décrite en référence à la figure 1.

Le tube 23, dont le diamètre correspond à celui de l'alésage 24 de l'embout et qui possède une collerette 23a formant butée, est introduit dans l'orifice 29 et est enfoncé dans l'alésage jusqu'à ce que la collerette 23a vienne en appui sur l'orifice 29. Bien évidemment, la longueur du tube 23 entre son extrémité et sa collerette 23a a été déterminée de façon que l'extrémité du tube atteigne le fond du logement 27. Si toutefois le tube ne comporte pas de collerette, il devra être enfoncé dans l'embout jusqu'à ce qu'il vienne en butée sur l'épaulement 25. Des repères sur le tube seront alors avantageusement prévus pour permettre à l'opérateur un contrôle visuel de l'enfoncement.

Pendant son enfoncement, le tube 23 a tout d'abord traversé le trou central du dispositif d'arrêt 31. Poursuivant son déplacement vers le logement 27, le tube 23 rencontre les deux joncs d'étanchéité 28. Grâce à la souplesse de la paroi de l'extension tubulaire 26, la partie annulaire des joncs laisse passer le tube tout en assurant un contact étanche avec lui.

Les observations formulées plus haut, à propos de la réalisation selon les figures 1 à 4 sont bien entendu applicables à la variante selon la figure 6, tant en ce qui concerne la sécurité du raccordement que sa facilité de démontage.

## Revendications

1. Embout (**1-21**) pour le raccordement rapide d'un tube (**4-23**) en matériau rigide, tel que du métal, ou semi-rigide, tel qu'une matière plastique, ledit embout présentant, à une extrémité destinée à recevoir le tube, un alésage (**5-24**) dont le diamètre est sensiblement égal au diamètre extérieur du tube, ledit alésage étant pourvu d'au moins un jonc souple d'étanchéité susceptible de venir en contact avec l'une des parois du tube, cependant qu'entre l'orifice d'entrée (**9-29**) de l'alésage et le jonc d'étanchéité, l'embout comporte un logement (**10-30**) recevant, pour l'arrêt du tube, un organe escamotable (**11-31**) qui y est localement immobilisé dans le sens axial, caractérisé en ce que l'embout (**1-21**) et le jonc d'étanchéité (**7-28**) de son alésage sont réalisés dans le même matériau en une seule pièce obtenue par une unique opération de moulage et en ce que le jonc est situé sur une paroi mince (**7a-26**) de l'embout, dont la souplesse autorise le passage dudit tube.

2. Embout selon la revendication 1, caractérisé en ce que le jonc souple d'étanchéité (**7**) fait saillie à l'intérieur de l'alésage (**5**).

3. Embout selon la revendication 1, caractérisé en ce que, à l'intérieur de l'alésage (**24**), est disposée une extension tubulaire (**26**) dont le diamètre extérieur est sensiblement égal au diamètre intérieur du tube (**23**), ladite extension tubulaire définissant ainsi un logement en forme de gorge tubulaire (**27**) pour l'extrémité du tube, cependant qu'au moins un jonc d'étanchéité (**28**) est prévu sur la paroi extérieure de l'extension tubulaire.

4. Embout selon l'une quelconque des revendications 1 à 3, caractérisé en ce que le logement (**10**) est en forme de coin et est délimité par deux faces planes (**10a** et **10b**) en regard l'une de l'autre, respectivement perpendiculaire et inclinée par rapport à l'axe de l'alésage (**5**).

5. Embout selon la revendication 4, caractérisé en ce qu'il comporte, à son extrémité libre, un bouchon (**13**) qui y est immobilisé, la face plane interne dudit bouchon étant inclinée par rapport à l'axe de l'alésage (**5**) et constituant l'une (**10b**) des faces du logement (**10**) en forme de coin.

6. Embout selon la revendication 4, caractérisé en ce que le dispositif d'arrêt (**11**) du tube est constitué par un élément (**12**) résistant, mince et déformable, présentant d'une part, au moins une zone (**12d**) mobile dans le logement (**10**) en forme de coin et, d'autre part, une zone (**12c**) axialement immobilisée entre les faces (**10a** et **10b**) dudit logement, la distance de ces deux zones étant sensiblement égale au diamètre de l'alésage (**5**).

7. Embout selon la revendication 6, caractérisé en ce que le dispositif d'arrêt (**11**) est constitué par une rondelle (**12**) résistante, mince et déformable, dont le diamètre intérieur est sensiblement égal à celui de l'alésage (**5**) et dont une zone (**12a**) de la périphérie est immobilisée axialement.

## Patentansprüche

1. Rohrstück (**1-21**) zur Schnellankupplung eines Rohres (**4-23**) aus starrem Material, wie Metall, oder halbstarrem Material, wie Plastikmaterial, welches Rohrstück an einem zur Aufnahme des Rohres bestimmten Ende eine Bohrung (**5-24**) aufweist, deren Durchmesser im wesentlichen gleich dem Außendurchmesser des Rohres ist, welche Bohrung mit mindestens einem nachgiebigen Dichtring versehen ist, der mit einer Wand des Rohres in Kontakt gelangen kann, wobei das Rohrstück zwischen der Eingangsöffnung (**9-29**) der Bohrung und dem Dichtring eine Aufnahme (**10-30**) zum Aufnehmen eines dort in axialer Richtung ortsfesten ausziehbaren Organs (**11-31**) zum Arretieren des Rohres umfaßt, dadurch gekennzeichnet, daß das Rohrstück (**1-21**) und der Dichtring (**7-28**) seiner Bohrung aus demselben Material durch einen einzigen Formungsvorgang einstückig hergestellt sind und daß der Dichtring an einer dünnen Wand (**7a-26**) des Rohrstücks angeordnet ist, deren Nachgiebigkeit den Durchtritt des Rohres zuläßt.

2. Rohrstück nach Anspruch 1, dadurch gekennzeichnet, daß der nachgiebige Dichtring (**7**) vom Inneren der Bohrung (**5**) absteht.

3. Rohrstück nach Anspruch 1, dadurch gekennzeichnet, daß im Inneren der Bohrung (**24**) eine rohrförmige Verlängerung (**26**) vorgesehen ist, deren Außendurchmesser im wesentlichen gleich dem Innendurchmesser des Rohres (**23**) ist, welche rohrförmige Verlängerung so eine Aufnahme in Form einer rohrförmigen Nut (**27**) für das Ende des Rohres festlegt, wobei mindestens ein Dichtring (**28**) an der Außenwand der rohrförmigen Verlängerung vorgesehen ist.

4. Rohrstück nach einem der Ansprüche 1 bis 3, dadurch gekennzeichnet, daß die Aufnahme (**10**) keilförmig und durch zwei zueinanderschauende plane Flächen (**10a** und **10b**) begrenzt ist, welche senkrecht bzw. geneigt zur Achse der Bohrung (**5**) stehen.

5. Rohrstück nach Anspruch 4, dadurch gekennzeichnet, daß es an seinem freien Ende einen dort immobilisierten Stöpsel (**13**) umfaßt, wobei die plane Innenfläche des Stöpsels zur Achse der Bohrung (**5**) geneigt ist und eine (**10b**) der Flächen der keilförmigen Aufnahme (**10**) bildet.

6. Rohrstück nach Anspruch 4, dadurch gekennzeichnet, daß die Arretiereinrichtung (**11**) des Rohres durch ein dünnes und verformbares widerstandsfähiges Element (12) gebildet ist, welches einerseits eine in der keilförmigen Aufnahme (10) bewegliche Zone (12d) und anderseits eine zwischen den Flächen (10a und 10b) der Aufnahme axial immobilisierte Zone (12c) aufweist, wobei der Abstand dieser beiden Zonen im wesentlichen gleich dem Durchmesser der Bohrung (5) ist.

7. Rohrstück nach Anspruch 6, dadurch gekennzeichnet, daß die Arretiereinrichtung (11) durch eine dünne und verformbare widerstandsfähige Scheibe (12) gebildet ist, deren Innendurchmesser im wesentlichen gleich jenem der Bohrung (5) ist und deren eine Umfangszone (12a) axial immobilisiert ist.

## Claims

1. Joining piece 1-21 for the quick connection of a tube 4-23 made of rigid material, such as metal, or semi-rigid, such as a plastics material, said joining piece presenting, at one end intended to receive the tube, a bore 5-24 whose diameter is substantially equal to the outer diameter of the tube, said bore being provided with at least one flexible sealing ring capable of coming into contact with one of the walls of the tube, whilst, between the inlet orifice 9-29 of the bore and the sealing ring, the joining piece comprises a housing 10-30 receiving, for stopping the tube, a retractable member 11-31 which is locally immobilized therein in the axial direction, characterized in that the joining piece 1-21 and the sealing ring 7-28 of its bore are made of the same material in one piece obtained by a single operation of moulding and in that the ring is located on a thin wall 7a-26 of the joining piece, whose flexibility allows passage of said tube.

2. Joining piece according to Claim 1, characterized in that the flexible sealing ring 7 projects inside the bore 5.

3. Joining piece according to Claim 1, characterized in that, inside the bore 24 there is disposed a tubular extension 26 whose outer diameter is substantially equal to the inner diameter of the tube 23, said tubular extension thus defining a housing in the form of a tubular groove 27 for the end of the tube, whilst at least one sealing ring 28 is provided on the outer wall of the tubular extension.

4. Joining piece according to any one of Claims 1 to 3, characterized in that the housing 10 is in the form of a wedge and is defined by two plane faces 10a and 10b opposite each other, respectively perpendicular and inclined with respect to the axis of the bore 5.

5. Joining piece according to Claim 4, characterized in that it comprises, at its free end, a plug 13 which is immobilized therein, the inner plane face of said plug being inclined with respect to the axis of the bore 5 and constituting one (10b) of the faces of the wedge-shaped housing 10.

6. Joining piece according to Claim 4, characterized in that the device 11 for stopping the tube is constituted by a resistant, thin, deformable element 12 presenting on the one hand at least one zone 12d mobile in the housing 10 in wedge form and, on the other hand, a zone 12c axially immobilized between the faces 10a and 10b of said housing, the distance of these two zones being substantially equal to the diameter of the bore 5.

7. Joining piece according to Claim 6, characterized in that the stop device 11 is constituted by a resistant, thin and deformable washer 12 whose inner diameter is substantially equal to that of the bore 5 and of which a zone 12a of the periphery is axially immobilized.

Fig.1

Fig.2

Fig.3

EP 0 371 829 B1

Fig-4

13

5

10b

Fig-5

11

4

1

11

4

4c

4c

Fig-6

23a

31

21

22

30

26

25

21a

27

29

28

23

24